# FASCICULE DE BREVET EUROPEEN

(11) **EP 1 468 122 B1**
(45) Date de publication et mention de la délivrance du brevet: **16.07.2008**
(21) Numéro de dépôt: 03715040.6
(22) Date de dépôt: 22.01.2003
(51) Int. Cl.: C22B 19/20, C22B 3/42, C01G 9/00, C01G 9/04, C22B 23/00, C01G 53/08, B01J 41/04, C02F 1/42

(54) **PROCÉDÉ DE SÉPARATION DU ZINC ET DU NICKEL EN PRÉSENCE D'IONS CHLORURES**
VERFAHREN ZUR ABTRENNUNG VON ZINK UND NICKEL IN GEGENWART VON CHLORIDIONEN
METHOD FOR THE SEPARATION OF ZINC AND NICKEL IN THE PRESENCE OF CHLORIDE IONS

(30) Priorité: 23.01.2002 FR 0200816
(43) Date de publication de la demande: 20.10.2004
(73) Titulaire: SARP INDUSTRIES, 78520 Limay (FR)
(72) Inventeur: MULLER, Pascal, F-57155 Marly (FR); BENCHARA, Athmane, F-78200 Mantes-la-Jolie (FR); MEUX, Eric, F-57420 Pournoy-la-Grasse (FR); DEVIGILI, Pierre, F-57710 Aumetz (FR)
(74) Mandataire: Bentz, Jean-Paul
(86) Numéro de dépôt international: PCT/FR2003/000212
(87) Numéro de publication internationale: WO 2003/062478

(56) Documents cités:
- DE-A- 2 555 813
- FR-A- 1 583 920
- US-A- 4 123 260
- US-A- 4 883 599
- DATABASE WPI Section Ch, Week 197720 Derwent Publications Ltd., London, GB; Class M25, AN 1977-35053Y XP002215789 & JP 52 042420 A (TOHO BESLON CO LTD), 2 avril 1977 (1977-04-02)
- DATABASE WPI Section Ch, Derwent Publications Ltd., London, GB; Class E36, AN 1973-60927U XP002215790 & SU 368 186 A ("SEVERONIKEL", VI LENIN C)
- DATABASE WPI Section Ch, Week 198631 Derwent Publications Ltd., London, GB; Class D15, AN 1986-202748 XP002215791 & NL 8 403 683 A (NEDERLAND ORG TNO), 1 juillet 1986 (1986-07-01)
- DATABASE WPI Section Ch, Week 197730 Derwent Publications Ltd., London, GB; Class A14, AN 1977-52944Y XP002215792 & JP 52 070118 A (TOHO BESLON CO LTD), 10 juin 1977 (1977-06-10)
- PATENT ABSTRACTS OF JAPAN vol. 013, no. 491 (C-650), 7 novembre 1989 (1989-11-07) & JP 01 194988 A (SUMITOMO METAL IND LTD;OTHERS: 01), 4 août 1989 (1989-08-04)

## Description

La présente invention concerne un procédé de séparation du zinc et d'un second métal ne formant pas de complexe anionique stable en présence d'ions chlorures.

Bien que la présente invention concerne de manière générale la séparation du zinc et d'un second métal présentant une telle propriété en présence d'ions chlorures, la description qui va suivre est plus spécifiquement illustrée par le procédé de séparation du zinc et du nickel.

De nos jours, une attention particulière est portée au traitement des déchets, et notamment des effluents issus de l'industrie chimique, métallurgique...

Dans le cas particulier des procédés industriels mettant en oeuvre des catalyseurs métalliques, se pose le problème du traitement des boues organiques formées.

De manière générale, ces boues sont incinérées et les fumées engendrées par cette incinération sont alors traitées par voie humide.

Ce type de procédé permet la récupération des métaux, sous forme ionique, dans des effluents.

Se pose alors le problème du retraitement des effluents et, plus précisément, de la valorisation potentielle qui peut être faite des produits, dont les métaux, contenus dans ces effluents.

Le document FR-A-1 583 920 divulgue la purification d'une solution aqueuse comprenant du nickel et des impuretés métalliques choisies parmi le cobalt, le fer, le zinc etc, la purification est réalisée moyennant une résine échangeuse anionique en présence d'une concentration de 2N à 6N en ions chlorures.

Dans l'industrie particulière du Nylon®, les métaux que l'on trouve dans l'effluent, après traitement par voie humide, sont principalement le zinc et le nickel, sous forme de chlorures ZnCl₂ et NiCl₂.

Un exemple de composition classique d'un tel effluent est donné ci-après, les concentrations étant indiquées en g/l :
- Cl⁻ : 200 ± 50
- Zn : 140 ± 40
- Ni : 37 ± 10
- Ca : 19 ± 5

Jusqu'à ce jour, les voies de séparation classique des métaux se sont avérées inefficaces pour isoler le zinc et le nickel.

En effet, ces métaux ayant des propriétés chimiques très proches, les méthodes de séparation physico-chimiques de type précipitation ou les procédés de séparation électrochimiques tels que l'électrodéposition ne sont pas satisfaisants.

La présente invention a donc pour but de proposer un procédé permettant une séparation efficace du zinc et du second métal avec comme avantage immédiat de proposer une valorisation pour chacun des métaux dans leurs filières respectives.

La présente invention concerne donc un procédé de séparation du zinc et d'un second métal étant le nickel ne formant pas de complexe anionique en présence d'ions chlorures, le zinc et le second métal étant présents dans un effluent sous la forme de ZnCl₂ et de chlorure de second métal. Ce procédé consiste à former et à fixer le complexe anionique ZnCl⁻₃ sur une résine.

Selon l'invention, ce procédé tel que défini dans la revendication principale se caractérise en ce que la formation du complexe anionique est obtenue par mise en contact de l'effluent avec la résine saturée en ions chlorure, et en ce que le procédé comprend de plus les étapes de :
- extraction du chlorure de second métal au moyen d'un premier éluant, puis
- extraction du zinc au degré d'oxydation +II.

Contrairement au second métal nickel, le zinc possède la particularité de former un complexe anionique ZnCl₃⁻ en présence d'une quantité ou concentration adaptée d'ions chlorures, le second métal restant quant à lui sous forme de chlorure de métal non ionique, dans ces mêmes conditions de quantité ou de concentration particulière en ions chlorures.

Grâce à cette différence de comportement qui existe entre le nickel et le zinc vis à vis des ions chlorures, il est donc possible de faire adsorber le complexe anionique de ZnCl₃⁻ formé sur une résine adaptée, et d'extraire, par élution, le second métal sous forme de chlorure, notamment le nickel sous forme de NiCl₂.

Le nickel peut alors avantageusement être recyclé, directement ou après un traitement adapté, et valorisés chacun dans des filières adaptées, en particulier dans l'industrie métallurgique. Il peut, par exemple, être réutilisé dans des procédés de transformation des métaux à partir des minerais.

Après extraction du second métal sous forme de chlorure, il reste à procéder à l'extraction du zinc à son degré d'oxydation +II pour laquelle plusieurs voies sont proposées.

Une première voie consiste à extraire le Zn au degré d'oxydation +II au moyen d'un second éluant permettant la dilution de la concentration en ions chlorures, ce qui a pour effet de dissocier le complexe ZnCl₃⁻ selon la réaction :

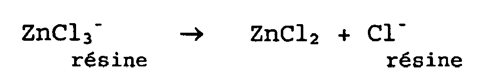

ZnCl₂, qui ne présente plus d'affinité avec la résine, peut alors être extrait.

Une seconde voie consiste à réaliser une étape de désorption du zinc à son degré d'oxydation +II par transformation, au moyen d'un réactif, du complexe ZnCl₃⁻ en un complexe de zinc plus stable que le complexe ZnCl₃⁻, et non adsorbé par la résine.

Une troisième voie consiste à réaliser une étape de désorption électrolytique du zinc à son degré d'oxydation +II.

Dans le cas particulier d'effluents tels que celui dont la composition a été donnée ci-dessus, il sera nécessaire de procéder à une étape préalable de traitement pour extraire le calcium (Ca²⁺ en solution) si présent dans l'effluent.

En effet, le recyclage envisagé pour le zinc et le nickel, et en particulier, leur réintroduction en tant que co-produit dans les filières métallurgiques de transformation des métaux à partir des minerais, n'est possible que si les teneurs en calcium sont très faibles.

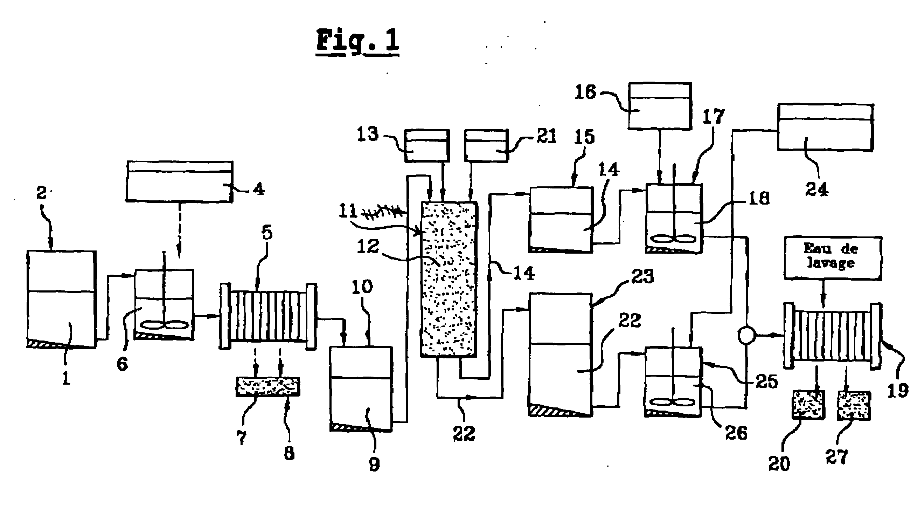

D'autres particularités et avantages de l'invention résulteront de la description qui va suivre, donnée à titre d'exemple non limitatif et faite en référence à la figure annexée qui constitue une vue schématique d'une installation susceptible d'être utilisée dans le cadre de la mise en oeuvre du procédé selon l'invention.

Il est précisé que les paramètres et résultats indiqués ci-dessous concernent le fonctionnement non optimisé d'une installation prototype à l'échelle du pilote mais suffisent à démontrer l'intérêt de la présente invention.

En référence à la figure annexée, 10 litres d'effluent initial 1 ont été introduits dans une cuve 2.

La composition de l'effluent 1 est conforme à celle indiquée précédemment, à savoir (en g/l) :
- Cl⁻ : 200 ± 50
- Zn : 140 ± 40
- Ni : 37 ± 10
- Ca : 19 ± 5

La présence de calcium dans l'effluent 1 impose, comme on l'a indiqué précédemment, un traitement préalable de l'effluent 1, notamment avant la formation du complexe anionique ZnCl₃⁻, pour en extraire le calcium.

Ce traitement est effectué dans une cuve 3 dans laquelle sont introduits d'une part l'effluent 1 à partir de la cuve 2 et d'autre part un réactif 4 visant à permettre l'extraction du calcium.

Ce réactif 4 peut avantageusement être de l'acide sulfurique, additionné en quantités stoechiométriques.

Après introduction, dans un séparateur solide-liquide 5, du mélange 6 constitué par l'effluent 1 additionné d'acide sulfurique 4, on obtient la précipitation de sulfate de calcium hydraté CaSO₄, xH₂O, ou gypse 7, recueilli dans le réceptacle 8.

La réaction chimique mise en oeuvre dans cette étape préliminaire est la suivante :

CaCl₂ + H₂SO₄ + xH₂O → CaSO₄,xH₂O + 2HCl

Pour 10 1 d'effluent 1 introduit, 0,5 kg H₂SO₄ à 98% ont permis de faire précipiter 1,6 kg de gypse 7 de formule CaSO₄, 2H₂O contenant de 20 à 30 % d'eau interstitielle.

La composition du gypse 7 ainsi obtenu, après séchage à 105°C jusqu'à masse constante, est la suivante, en % massique :

| | | | |
|---|---|---|---|
| - Ca : | 27,5 | - Zn : | 0,18 |
| - S : | 20,8 | - Cl : | 0,18 |
| - Si : | 0,3 | - Ni : | 0,06 |

Cette composition est très proche des valeurs théoriques calculées pour du gypse pur : en effet, les pourcentages théoriques calculés donne les valeurs suivantes (pour x=0,5) :
- Ca : 27,5
- S : 22,0

Compte tenu de sa grande pureté, le gypse 7 peut facilement être recyclé dans les filières de la cimenterie et/ou de la plâtrerie.

Après passage dans le séparateur solide-liquide 5, l'effluent 9, constitué par l'effluent initial dépourvu de calcium, est introduit dans une cuve 10 pour introduction ultérieure dans la colonne de séparation 11 d'une capacité de 60 1, remplie intérieurement de résine 12.

A titre d'exemple, la résine peut être formée d'un squelette copolymère styrène-divinylbenzène et d'un groupe fonctionnel N(CH₃)₃⁺ sous forme ionique.

Dans la cas présent, la résine 12 utilisée est une résine de type "Hewatitt".

Préalablement à l'introduction de l'effluent 9 dans la colonne 11, on réalise une saturation de la résine 12 par introduction d'une solution d'acide chlorhydrique HCl, ou de chlorure de sodium NaCl, afin de créer un milieu concentré en ions chlorures.

Un tel milieu concentré en ions chlorures est en effet favorable à la formation du complexe anionique ZnCl₃⁻.

Cette étape de saturation de la résine 12 est réalisée par ajout d'une solution de chlorures sous forme de HCl, NaCl, KCl... dont la concentration équivalente en ions chlorures est supérieure ou égale à 0,7 mol/l environ et, de préférence, comprise entre 1 et 1,3mol/l environ.

Dans le cadre du traitement illustré pour l'effluent 1 défini ci-dessus, la saturation de la résine 12 a été réalisée par l'introduction, à une vitesse de l'ordre de 0,45 1/mn, de 35 1 d'une solution de HCl à une concentration équivalente en ions chlorures de 1 mol/l.

On notera que la formation et la fixation du Zn sous forme de ZnCl₃⁻ sur la résine 12 est observée dans cette étape.

Après saturation de la résine 12 dans les conditions indiquées ci-dessus, l'effluent 9 est introduit, à vitesse constante et à raison de 2 1/mn, dans la partie supérieure de la colonne 11, la partie inférieure de cette colonne 11 étant obturée, lors de cette opération d'introduction de l'effluent 9.

Le Zn au degré d'oxydation +II se fixe sur la résine 12 sous la forme du complexe anionique ZnCl₃⁻.

Dans tous les cas, l'étape suivante consiste à extraire, par un premier éluant 13, le chlorure de nickel NiCl₂ présent dans l'effluent 9 et qui n'a pas été adsorbé par la résine 12.

Ce premier éluant 13 peut être une solution d'acide chlorhydrique HCl ou de chlorure de sodium NaCl.

De manière avantageuse, ce premier éluant 13 a une concentration en ions chlorures supérieure ou égale à 0,7 mol/l environ et, de préférence, comprise entre 1 et 1,3 mol/l environ Une telle concentration en ions chlorures permet en effet de maintenir le zinc sous sa forme complexée ZnCl₃⁻ et donc adsorbée sur la résine 12, et de permettre en conséquence une élution sélective et optimisée du NiCl₂ présent dans l'effluent 9.

Le produit d'élution au moyen de ce premier éluant 13 est un effluent 14, collecté à partir de la partie inférieure de la colonne 11, ouverte lors de cette étape d'élution, et recueilli dans la cuve 15.

De manière avantageuse, l'élution au moyen de ce premier éluant 13 est interrompue lorsque la concentration en nickel dans l'effluent 14 en sortie de colonne 11 devient négligeable.

Ce stade optimisé d'élution, et donc de séparation du nickel présent dans les effluents 1 puis 9, a été atteint après introduction dans la colonne 11, à une vitesse de 2 l/mn, de 50 1 d'une solution de HCl ou de NaCl à une concentration équivalente en ions chlorures de 1 mol/l.

Cet effluent 14 est donc constitué par une solution de chlorure de nickel NiCl₂ pure, dans laquelle le zinc n'est présent qu'à l'état de trace, comme on le vérifiera par la suite.

L'effluent 14 peut alors être mis en oeuvre selon divers traitements, parmi lesquels des traitements visant à valoriser le nickel proprement dit.

A titre d'exemple non limitatif, on peut faire réagir le NiCl₂ extrait par le premier éluant 13, et donc précipiter le Ni²⁺ présent en solution, avec un réactif de précipitation 16.

L'effluent 14 est introduit dans une cuve de précipitation 17 dans laquelle est ajouté le réactif de précipitation 16.

De préférence, le réactif de précipitation 16 est un réactif alcalin, qui permet de former l'hydroxyde de nickel Ni(OH)₂.

On peut avantageusement choisir le réactif alcalin parmi la soude, la chaux, la potasse.

Avantageusement, le réactif de précipitation 16 est introduit jusqu'à l'obtention d'un pH compris entre 9,5 et 10,5 où l'hydroxyde de nickel est à son minimum de solubilité.

De manière générale, le réactif de précipitation 16 est introduit dans des quantités permettant d'atteindre le pH correspondant au minimum de solubilité du précipité de cation de second métal.

Dans le présent cas, l'effluent 14 a été mis en présence de 4 1 de soude (10 M) dans la cuve de précipitation 17.

L'hydroxyde de nickel Ni(OH)₂ se forme conformément à la réaction chimique suivante :

NiCl₂ + 2NaOH → Ni (OH)₂ + 2NaCl

Pour optimiser cette étape de précipitation, puis l'étape ultérieure de filtration, un réactif coagulant et/ou floculant classique peut avantageusement être ajouté dans la cuve de précipitation 17.

Le mélange solide-liquide 18 obtenu dans la cuve de précipitation 17 est ensuite introduit puis séparé au moyen d'un filtre-presse 19.

La phase solide est ensuite lavée par 60 1 d'eau dans le filtre-presse 19 puis le gâteau d'hydroxyde de nickel 20 est isolé.

1,5 kg d'hydroxyde de nickel Ni(OH)₂ (60% d'eau) ont été obtenus.

Cet hydroxyde 20, après séchage à 105°C jusqu'à masse constante, a la composition suivante, en % massique :

| | | | |
|---|---|---|---|
| - Ni : | 58,6 | - S : | 0,2 |
| - Cl : | 1,9 | - Ca : | 0,1 |
| - Na : | 1,1 | - Zn : | <0,1 |
| - Si : | 0,8 | | |

Ces résultats confirment bien la séparation particulièrement sélective et très performante du nickel à partir de l'effluent 9, la quantité de zinc étant effectivement indétectable.

Après élution du nickel au moyen du premier éluant 13 en vue de son traitement ultérieur, on procède à l'étape d'extraction du zinc adsorbé sur la résine 12.

De manière préférée, l'étape d'extraction du zinc à son degré d'oxydation +II n'est réalisée qu'après extraction complète de NiCl₂, afin d'optimiser, non seulement la séparation sélective du nickel, mais également celle du zinc.

Dans la pratique, des mesures quantitatives opérées en sortie de colonne 11, permettent de définir lorsque la totalité du nickel présent dans l'effluent 9 a été extrait et se retrouve dans l'effluent 14.

Cette étape d'extraction du zinc peut être réalisée selon plusieurs procédés.

Une première voie consiste à dissocier le complexe anionique ZnCl₃⁻ pour former ZnCl₂ libre. Cette dissociation est réalisée au moyen d'un second éluant 21 permettant la dilution, et donc la diminution, de la concentration en ions chlorures dans le milieu contenu à l'intérieur la colonne 11.

Sur la figure annexée, on a schématisé les étapes correspondant à la première voie d'extraction du zinc.

Dans de telles conditions, et pour une concentration en ions chlorures atteignant, par exemple, une valeur inférieure à 1 mol/l, le complexe anionique ZnCl₃⁻ se dissocie et entraîne la désorption du zinc sous forme de ZnCl₂ qui passe en solution.

Ce second éluant 21 peut être une solution de chlorure de sodium NaCl ou de l'eau.

Le produit d'élution obtenu au moyen de ce second éluant 21 est un effluent 22, collecté à partir de la partie inférieure de la colonne 11, ouverte lors de cette étape d'élution, et recueilli dans la cuve 23.

Pour optimiser le rendement de zinc récupéré, l'élution au moyen de ce second éluant 21 est interrompue lorsque la concentration en zinc dans l'effluent 22 en sortie de colonne 11 n'est plus détectable.

Ce stade optimisé d'élution, et donc de séparation du zinc présent dans les effluents 1 puis 9, a été atteint après introduction dans la colonne 11, à une vitesse de 2 l/mn, de 210 1 d'eau.

Ce volume est supérieur à 200 1 lorsque l'on procède à une élution avec des eaux recyclées (issues du présent process) contenant des chlorures à une teneur de 10 g/l.

L'effluent 22, constitué par une solution de chlorure de zinc ZnCl₂ parfaitement pure, peut alors être mis en oeuvre selon divers traitements, parmi lesquels des traitements visant à valoriser le zinc proprement dit.

On peut notamment faire réagir le ZnCl₂ extrait par le second éluant 21, et donc précipiter le Zn²⁺ présent en solution, avec un réactif de précipitation 24.

L'effluent 22 est introduit dans une cuve de précipitation 25 dans laquelle est ajouté le réactif de précipitation 24.

De préférence, le réactif de précipitation 24 est un réactif alcalin, qui permet de former l'hydroxyde de zinc Zn(OH)₂.

On peut avantageusement choisir le réactif alcalin parmi la soude, la chaux, la potasse.

Un sulfure peut également être utilisé comme réactif de précipitation 24, ce qui permet la formation de sulfure de zinc ZnS.

Avantageusement, le réactif de précipitation 24 est introduit dans des quantités permettant d'atteindre le pH correspondant au minimum de solubilité du précipité de Zn²⁺.

Dans le présent cas, l'effluent 22 a été mis en présence de 2 1 de soude (10 M) dans la cuve de précipitation 25.

L'hydroxyde de zinc Zn(OH)₂ se forme conformément à la réaction chimique suivante :

ZnCl₂ + 2NaOH → Zn(OH)₂ + 2NaCl

Dans l'hypothèse où l'effluent 22 est mis en présence de sulfure de sodium dans la cuve de précipitation 25, le sulfure de zinc ZnS se forme conformément à la réaction chimique suivante :

ZnCl₂ + Na₂S → ZnS + 2NaCl

Pour optimiser l'une ou l'autre de ces étapes de précipitation, puis l'étape ultérieure de filtration, il est possible d'ajouter un réactif coagulant et/ou floculant dans la cuve de précipitation 25.

Le mélange solide-liquide 26 obtenu dans la cuve de précipitation 25 est ensuite introduit puis séparé au moyen du filtre-presse 19, qui aura été vidé au préalable de l'hydroxyde de nickel 20 recueilli lors d'une étape précédente.

La phase solide est ensuite lavée à par 60 1 d'eau dans le filtre-presse 19 puis le gâteau d'hydroxyde de zinc 27 est isolé.

5 kg d'hydroxyde de zinc Zn(OH)₂ (60% d'eau) ont été obtenus.

Cet hydroxyde 27, après séchage à 105°C jusqu'à masse constante, a la composition suivante, en % massique :

| | | | |
|---|---|---|---|
| - Zn : | 62, 5 | - Si : | 0,6 |
| - Cl : | 1,7 | - Ni : | 0,2 |
| - Na : | 0,9 | - S : | 0,04 |
| - Ca : | 0,7 | | |

On constate donc que cet hydroxyde de zinc 27 est de grande pureté et peut valablement être valorisé au travers de filières de transformation du zinc de l'industrie métallurgique.

Une seconde voie permettant l'extraction du zinc consiste à réaliser, après l'étape d'extraction de NiCl₂, une étape de désorption du zinc au degré d'oxydation +II.

Cette étape vise à transformer le complexe anionique ZnCl₃⁻ adsorbé sur la résine en un complexe de zinc qui est plus stable que le complexe ZnCl₃⁻ et n'est pas adsorbé sur la résine 12.

Une désorption quantitative du zinc est notamment obtenue lorsque l'étape de désorption est réalisée par une solution d'ammoniaque. Le complexe formé dans ce cas est Zn(NH₃)₄²⁺.

Une troisième voie envisagée consiste à réaliser, après l'étape d'extraction de NiCl₂, une étape de désorption électrolytique du zinc à son degré d'oxydation +II.

Pour ce faire, la résine 12 sur laquelle est formé le complexe anionique ZnCl₃⁻ est extraite de la colonne 11 et placée sur une membrane perméable, cette membrane étant elle-même positionnée entre deux électrodes.

L'application d'une différence de potentiel électrique entre ces deux électrodes permet la désorption, l'électromigration et donc l'extraction, du zinc au degré d'oxydation +II.

Bien entendu, la présente invention n'est pas limitée à l'exemple de mise en oeuvre du procédé et à l'installation afférente décrits ci-dessus et on peut y apporter des variantes d'exécution sans sortir du domaine de l'invention telle que définie dans les revendication annexées.

Il faut rappeler que les paramètres (volumes, vitesses d'élution,...) et résultats indiqués précédemment concernent une installation prototype à l'échelle du pilote, pour une colonne 11 d'une capacité de 60 1.

De telles données seront bien évidemment à adapter pour des installations industrielles.

De plus, l'installation schématisée à la figure annexée est adaptée à la mise en oeuvre du procédé selon l'invention en semi-continu ou par "batch".

Il est bien évidemment envisageable de mettre en oeuvre le procédé en continu.

Pour ce faire, l'installation représentée à la figure annexée sera valablement complétée par la mise en place d'au moins deux colonnes 11 disposées en parallèles, contenant chacune la résine 12 de fixation du complexe anionique ZnCl₃⁻ ; de telles colonnes 11 peuvent alors être successivement utilisées pour les étapes du procédé de séparation du zinc et du nickel selon l'invention.

En outre, il est important de noter les différentes solutions, parmi lesquelles les solutions d'extraction ou les solutions de lavage mises en oeuvre dans le cadre du présent procédé, peuvent avantageusement être recyclées, notamment dans un souci de limitation des coûts d'exploitation.

## Revendications

1. Procédé de séparation du zinc et d'un second métal, le zinc et le second métal étant présents dans un effluent (1, 9) sous la forme de ZnCl₂ et de chlorure de second métal, le second métal étant le nickel, et l'effluent comprenant une concentration de zinc de 140 ± 40 g/l et une concentration de nickel de 37 ± 10 g/l,
ledit procédé consistant à former et à fixer le complexe anionique ZnCl₃⁻ sur une résine (12),
**caractérisé en ce que** la formation du complexe anionique ZnCl₃⁻ est obtenue par mise en contact, dans au moins une colonne (11) obturée, de l'effluent (1, 9) avec la résine (12) préalablement saturée en ions chlorures, et **en ce que** le procédé comprend de plus les étapes de :
- extraction du chlorure de second métal NiCl₂ par élution sélective au moyen d'un premier éluant (13) présentant une concentration en ions chlorures permettant de maintenir le zinc sous forme complexée ZnCl₃⁻, puis
- extraction du zinc au degré d'oxydation +II.

2. Procédé selon la revendication 1, **caractérisé en ce que** la saturation de la résine (12) est réalisée par une solution dont la concentration en ions chlorures est supérieure ou égale à 0,7 mol/l environ et, de préférence, comprise entre 1 et 1,3 mol/l environ.

3. Procédé selon la revendication 2, **caractérisé en ce que** la solution permettant la saturation de la résine (12) est une solution de HCl ou de NaCl.

4. Procédé selon l'une quelconque des revendications 1 à 3, **caractérisé en ce que** le premier éluant (13) est une solution dont la concentration en ions chlorures est supérieure ou égale à 0,7 mol/l environ et, de préférence, comprise entre 1 et 1,3 mol/l environ.

5. Procédé selon l'une quelconque des revendications 1 à 4, **caractérisé en ce que** le premier éluant (13) est une solution de HCl ou de NaCl.

6. Procédé selon l'une quelconque des revendications 1 à 5, **caractérisé en ce que** le chlorure de métal, extrait par le premier éluant (13), est précipité avec un réactif de précipitation (16), de préférence un réactif alcalin.

7. Procédé selon la revendication 6, **caractérisé en ce que** le réactif alcalin est choisi parmi la soude, la chaux, la potasse.

8. Procédé selon la revendication 6 ou 7, **caractérisé en ce que** le réactif de précipitation (16) est introduit dans des quantités permettant d'atteindre le pH correspondant au minimum de solubilité du précipité de cation de second métal.

9. Procédé selon l'une quelconque des revendications 1 à 8, **caractérisé en ce que** l'étape d'extraction du zinc au degré d'oxydation +II est réalisée après extraction complète du chlorure de second métal.

10. Procédé selon l'une des revendications 1 à 9, **caractérisé en ce que**, après l'étape d'extraction du chlorure de métal, le procédé comprend une étape de dissociation du complexe ZnCl₃⁻ pour former ZnCl₂ et d'extraction du ZnCl₂ ainsi obtenu au moyen d'un second éluant (21) permettant la dilution de la concentration en ions chlorures.

11. Procédé selon la revendication 10, **caractérisé en ce que** le second éluant (21) est une solution dont la concentration en ions chlorures est inférieure à 1 mol/l environ.

12. Procédé selon la revendication 10 ou 11, **caractérisé en ce que** le second éluant (21) est choisi parmi du NaCl, de l'eau.

13. Procédé selon l'une quelconque des revendications 10 à 12, **caractérisé en ce que** le ZnCl₂ extrait par le second éluant (21) est précipité avec un réactif de précipitation (24), de préférence un réactif alcalin ou un sulfure.

14. Procédé selon la revendication 13, **caractérisé en ce que** le réactif alcalin est choisi parmi la soude, la chaux, la potasse.

15. Procédé selon la revendication 13 ou 14, **caractérisé en ce que** le réactif de précipitation (24) est introduit dans des quantités permettant d'atteindre le pH correspondant au minimum de solubilité du précipité de Zn²⁺.

16. Procédé selon l'une des revendications 1 à 9, **caractérisé en ce que**, après l'étape d'extraction du chlorure de second métal (Ni), le procédé comprend une étape de désorption du zinc au degré d'oxydation +II par transformation du complexe ZnCl₃⁻ en un complexe de zinc plus stable que le complexe ZnCl₃⁻.

17. Procédé selon la revendication 16, **caractérisé en ce que** l'étape de désorption est réalisée par une solution d'ammoniaque.

18. Procédé selon l'une des revendications 1 à 9, **caractérisé en ce que**, après l'étape d'extraction du chlorure de second métal (Ni), le procédé comprend une étape de désorption électrolytique du zinc au degré d'oxydation +II.

19. Procédé selon l'une des revendications 1 à 18, **caractérisé en ce qu'**il comprend en outre une étape préalable d'extraction du calcium présent dans l'effluent (1).

20. Procédé selon la revendication 19, **caractérisé en ce que** l'extraction est réalisée par addition d'acide sulfurique, dans des quantités stoechiométriques.

## Claims

1. Process for separating zinc and a second metal, the zinc and the second metal being present in an effluent (1, 9) in the form of ZnCl₂ and the chloride of the second metal, the second metal being nickel, and the effluent comprising a concentration of zinc of 140 ± 40 g/l and a concentration of nickel of 37 ± 10 g/l,
said process comprising forming and fixing the anionic complex ZnCl₃ to a resin (12),
**characterised in that** the anionic complex ZnCl₃ is formed by contacting the effluent (1, 9), in at least one sealed column (11), with the resin (12) which has previously been saturated with chloride ions, and **in that** the process further comprises the steps of:
- extracting the second metal chloride NiCl₂ by selective elution using a first eluant (13) having a chloride ion concentration that enables the zinc to be maintained in the complexed ZnCl₃⁻ form, then
- extracting the zinc in the +II oxidation state.

2. Process according to claim 1, **characterised in that** the saturation of the resin (12) is carried out using a solution wherein the chloride ion concentration is greater than or equal to about 0.7 mol/l and preferably between about 1 and 1.3 mol/l.

3. Process according to claim 2, **characterised in that** the solution for saturating the resin (12) is a solution of HCl or NaCl.

4. Process according to any one of claims 1 to 3, **characterised in that** the first eluant (13) is a solution wherein the chloride ion concentration is greater than or equal to about 0.7 mol/l and preferably between about 1 and 1.3 mol/l.

5. Process according to any one of claims 1 to 4, **characterised in that** the first eluant (13) is a solution of HCl or NaCl.

6. Process according to any one of claims 1 to 5, **characterised in that** the metal chloride, extracted using the first eluant (13), is precipitated with a precipitation reagent (16), preferably an alkaline reagent.

7. Process according to claim 6, **characterised in that** the alkaline reagent is selected from among soda, lime and potash.

8. Process according to claim 6 or 7, **characterised in that** the precipitation reagent (16) is added in amounts such that a pH is obtained corresponding to the minimum solubility of the precipitate of the second metal cation.

9. Process according to any one of claims 1 to 8, **characterised in that** the step of extracting the zinc in the +II oxidation state is carried out after total extraction of the second metal chloride.

10. Process according to one of claims 1 to 9, **characterised in that**, after the step of extracting the metal chloride, the process comprises a step of dissociation of the complex ZnCl₃ to form ZnCl₂ and extraction of the ZnCl₂ thus obtained using a second eluant (21) which makes it possible to dilute the concentration of chloride ions.

11. Process according to claim 10, **characterised in that** the second eluant (21) is a solution the chloride ion concentration of which is less than about 1 mol/1.

12. Process according to claim 10 or 11, **characterised in that** the second eluant (21) is selected from among NaCl and water.

13. Process according to any one of claims 10 to 12, **characterised in that** the ZnCl₂ extracted using the second eluant (21) is precipitated with a precipitating reagent (24), preferably an alkaline reagent or a sulphide.

14. Process according to claim 13, **characterised in that** the alkaline reagent is selected from among soda, lime and potash.

15. Process according to claim 13 or 14, **characterised in that** the precipitation reagent (24) is added in amounts such that a pH is obtained corresponding to the minimum solubility of the Zn²⁺ precipitate.

16. Process according to one of claims 1 to 9, **characterised in that**, after the step of extraction of the chloride of the second metal (Ni), the process comprises a step of desorption of the zinc in the +II oxidation state by converting the ZnCl₃⁻ complex into a more stable zinc complex than the ZnCl₃⁻ complex.

17. Process according to claim 16, **characterised in that** the desorption step is carried out using a solution of ammonia.

18. Process according to one of claims 1 to 9, **characterised in that**, after the step of extraction of the chloride of the second metal (Ni), the process comprises a step of electrolytic desorption of the zinc in the +II oxidation state.

19. Process according to one of claims 1 to 18, **characterised in that** it further comprises a prior step of extracting the calcium present in the effluent (1).

20. Process according to claim 19, **characterised in that** the extraction is carried out by the addition of sulphuric acid in stoichiometric quantities.

## Patentansprüche

1. Verfahren zur Ausscheidung von Zink und eines zweiten Metalls, wobei das Zink und das zweite Metall in einem Abwasser (1, 9) in Form von ZnCl₂ und eines Chlorids des zweiten Metalls vorhanden sind, wobei das zweite Metall aus Nickel besteht und das Abwasser eine Konzentration an Zink von 140 ± 40 g/l und eine Konzentration an Nickel von 37 ± 10 g/l umfasst, wobei das besagte Verfahren darin besteht, den anionischen Komplex ZnCl₃ auf einem Harz (12) zu bilden und zu fixieren,
**dadurch gekennzeichnet, dass** die Bildung des anionischen Komplexes ZnCl₃ erhalten wird, indem das Abwasser (1, 9), in zumindest einer verschlossenen Säule, mit dem an Chloridionen vorab gesättigten Harz (12) in Kontakt gebracht wird, und **dadurch**, dass das Verfahren ferner die Schritte umfasst:
- Extraktion des Chlorids des zweiten Metalls NiCl₂ durch selektive Elution mit Hilfe eines ersten Eluenten (13), der eine Konzentration an Chloridionen aufweist, die es ermöglicht, das Zink in komplexer Form von ZnCl₃ aufrechtzuerhalten, und dann
- Extraktion des Zinks mit der Oxydationsstufe +II.

2. Verfahren nach Anspruch 1, **dadurch gekennzeichnet, dass** die Sättigung des Harzes (12) durch eine Lösung erreicht wird, deren Konzentration an Chloridionen größer oder gleich ungefähr 0,7 mol/l ist und vorzugsweise zwischen ungefähr 1 und 1,3 mol/l liegt.

3. Verfahren nach Anspruch 2, **dadurch gekennzeichnet, dass** die Lösung, welche die Sättigung des Harzes (12) ermöglicht, eine HCl- oder NaCl- Lösung ist.

4. Verfahren nach einem der Ansprüche 1 bis 3, **dadurch gekennzeichnet, dass** der erste Eluent (13) eine Lösung ist, dessen Konzentration an Chloridionen größer oder gleich ungefähr 0,7 mol/l ist und vorzugsweise zwischen ungefähr 1 und 1,3 mol/l liegt.

5. Verfahren nach einem der Ansprüche 1 bis 4, **dadurch gekennzeichnet, dass** der erste Eluent (13) eine HCl- oder NaCl- Lösung ist.

6. Verfahren nach einem der Ansprüche 1 bis 5, **dadurch gekennzeichnet, dass** Metallchlorid, das mit Hilfe des ersten Eluenten (13) extrahiert wurde, mit einem Ausfällungsmittel (16), vorzugsweise einem alkalischen Reaktionsmittel, ausgefällt wird.

7. Verfahren nach Anspruch 6, **dadurch gekennzeichnet, dass** das alkalische Reaktionsmittel ausgewählt wird aus Soda, Kalk, Pottasche.

8. Verfahren nach Anspruch 6 oder 7, **dadurch gekennzeichnet, dass** das Ausfällungsmittel (16) in Mengen eingeleitet wird, mit denen der pH-Wert erreicht werden kann, der mit der Mindestlöslichkeit der Kationenausfällung des zweiten Metalls korrespondiert.

9. Verfahren nach einem der Ansprüche 1 bis 8, **dadurch gekennzeichnet, dass** der Schritt der Extraktion des Zinks mit der Oxydationsstufe +II nach einer vollständigen Extraktion des Chlorids des zweiten Metalls durchgeführt wird.

10. Verfahren nach einem der Ansprüche 1 bis 9, **dadurch gekennzeichnet, dass** nach dem Schritt der Extraktion des Metallchlorids das Verfahren aufweist einen Schritt der Dissoziation des Komplexes ZnCl₃, um ZnCl₂ zu bilden, und der Extraktion des so erhaltenen ZnCl₂ mit Hilfe eines zweiten Eluenten (21), der die Verdünnung der Konzentration an Chloridionen erlaubt.

11. Verfahren nach Anspruch 10, **dadurch gekennzeichnet, dass** der zweite Eluent (21) eine Lösung ist, deren Konzentration an Chloridionen unter ungefähr 1 mol/l beträgt.

12. Verfahren nach Anspruch 10 oder 11, **dadurch gekennzeichnet, dass** der zweite Eluent (21) ausgewählt wird aus NaCl, Wasser.

13. Verfahren nach einem der Ansprüche 10 bis 12, **dadurch gekennzeichnet, dass** das durch den zweiten Eluenten (21) extrahierte ZnCl₂ mit einem Ausfällungsmittel (24) ausgefällt wird, vorzugsweise einem alkalischen Reaktionsmittel oder einem Sulfid.

14. Verfahren nach Anspruch 13, **dadurch gekennzeichnet, dass** das alkalische Reaktionsmittel ausgewählt wird aus Soda, Kalk, Pottasche.

15. Verfahren nach Anspruch 13 oder 14, **dadurch gekennzeichnet, dass** das Ausfällungsmittel (24) in Mengen eingeleitet wird, mit denen der pH-Wert erreicht werden kann, der mit der Mindeslöslichkeit der Zn²⁺- Ausfällung korrespondiert.

16. Verfahren nach einem der Ansprüche 1 bis 9, **dadurch gekennzeichnet, dass** nach dem Schritt der Extraktion des Chlorids des zweiten Metalls (Ni) das Verfahren einen Schritt der Desorption des Zinks mit dem Oxydationsgrad +II durch Transformation des Komplexes ZnCl₃⁻ in einen stabileren Zinkkomplex als dem Komplex ZnCl₃⁻ umfasst.

17. Verfahren nach Anspruch 16, **dadurch gekennzeichnet, dass** der Schritt der Desorption mit Hilfe einer Ammoniaklösung durchgeführt wird.

18. Verfahren nach einem der Ansprüche 1 bis 9, **dadurch gekennzeichnet, dass** nach dem Schritt der Extraktion des Chlorids des zweiten Metalls (Ni) das Verfahren einen Schritt der elektrolytischen Desorption des Zinks mit der Oxydationsstufe +II umfasst.

19. Verfahren nach einem der Ansprüche 1 bis 18, **dadurch gekennzeichnet, dass** dieses ferner einen vorhergehenden Schritt der Extraktion des in dem Abwasser (1) vorhandenen Kalziums umfasst.

20. Verfahren nach Anspruch 19, **dadurch gekennzeichnet, dass** die Extraktion durch Hinzugabe von Schwefelsäure in stöchiometrischen Mengen durchgeführt wird.
